**Europäisches Patentamt**

(19) **European Patent Office**

**Office européen des brevets**

(11) Veröffentlichungsnummer: **0 157 153**
**B1**

(12) # EUROPÄISCHE PATENTSCHRIFT

(45) Veröffentlichungstag der Patentschrift:
18.05.88

(51) Int. Cl.⁴: **G 09 B 9/00**

(21) Anmeldenummer: **85101965.3**

(22) Anmeldetag: **22.02.85**

(54) **Radarsimulationsverfahren.**

(30) Priorität: **08.03.84 DE 3408404**

(43) Veröffentlichungstag der Anmeldung:
**09.10.85 Patentblatt 85/41**

(45) Bekanntmachung des Hinweises auf die Patenterteilung:
**18.05.88 Patentblatt 88/20**

(84) Benannte Vertragsstaaten:
**FR GB IT**

(56) Entgegenhaltungen:
**EP-A-0 042 785**

**MICROWAVE JOURNAL, Band 24, Nr. 9, September 1981, Seiten 79-89, Dedham, Massachusetts, US; J. MICHAELS: "EW training using radar EM environment"**

(73) Patentinhaber: **DORNIER SYSTEM GmbH, Postfach 1360, D-7990 Friedrichshafen (DE)**

(72) Erfinder: **Gröbke, Harald, Mimmenhauser Strasse 5, D-7777 Salem 9 (DE)**

(74) Vertreter: **Landsmann, Ralf, Dipl.- Ing., Kleeweg 3, D-7990 Friedrichshafen 1 (DE)**

**0 157 153**

## Beschreibung

Die Erfindung betrifft ein Verfahren zur rechnergestützten Simulation kompletter Radarsysteme, die momentane Leistungs- und Frequenzinformationen auswerten.

Mit Simulationsverfahren wird modellmässig getestet, wie sich ein Radarpuls bei seiner Ausbreitung, beim Reflektiertwerden am Ziel, beim Empfang in der Antenne und bei der Weiterverarbeitung im Empfänger verändert. Die gewonnenen Ergebnisse werden zur Optimierung der Signalverarbeitung verwandt.

Das Verfahren eignet sich insbesondere für Radarsysteme die speziell signifikante Amplitudenänderungen und/oder detaillierte Frequenzinformationen mit den Zielcharakteristika zu verknüpfen haben, wie z. B. einen Radarhöhenmesser für Satelliten oder ein satellitengestütztes Gerät zur Messung von Windgeschwindigkeiten über den Rückstreuquerschnitt von Ozeanwellen. Das Verfahren ist prinzipiell für alle Radarsysteme anwendbar, bei denen eine Leistungsmessung durchgeführt wird.

Die von einem Flächenelement dA im Abstand R reflektierte Leistung dp(t) beträgt nach der bekannten Radargleichung am Ausgang der Empfangsantenne am Beispiel des monostatischen Falles:

$$dp(t) = \frac{p_s(t - \frac{2R}{c_o}) \cdot G^2 \cdot \lambda_o^2}{(4\pi)^3 \cdot R^4} \; \sigma^o \, dA$$

mit

$p_s(t - \frac{2R}{c_o})$ = Sendeleistung, retadiert um die zweifache Laufzeit $\frac{R}{c_o}$ zwischen Sender/Empfänger und Ziel

$G$ = Antennengewinn

$\lambda_o$ = mittlere Wellenlänge

$c_o$ = Lichtgeschwindigkeit

$\sigma^o$ = Leistungsreflektivität des Ziels.

Die am Empfängereingang zur Verfügung stehende Gesamtleistung ist das Integral über alle reflektierten Leistungsinkremente des Zielbereichs. Die bekannte Radargleichung verknüpft also die Eingangsleistung eines Radarempfängers mit der Sendeleistung über Ausbreitungsweg und Radarziel als Funktion der Zeit. Eine gleichzeitige Beschreibung der enthaltenen Frequenzinformation, insbesondere der momentanen Dopplerfrequenzverschiebung und zum Beispiel frequenzmodulierter Sendesignale ist im allgemeinen unmöglich.

Diese Informationen können erhalten werden, wenn gleichzeitig Amplituden- und Phaseninformationen verarbeitet werden. Ein solches Verfahren ist zum Beispiel in Scientia Electrica, Vol. 23 (1977), Heft 3, Seiten 81 bis 93 vorbeschrieben. Diese Verfahren sind sehr aufwendig und daher langsam. Dabei ist zusätzlich die Generierung von statistisch relevanten Datensätzen über Zufallsprogramme, zum Beispiel über Monte Carlo Verfahren, notwendig. Diese Verfahren sind sehr zeitaufwendig und erfordern hohe Rechnerkapazitäten und Rechnergaschwindigkeiten.

Aufgabe der Erfindung ist es, ein Verfahren zur Simulation eines Radarempfängers anzugeben, mit dem alle frequenzspezifischen Eigenschaften, wie zum Beispiel komplettes Sendespektrum, Dopplerverschiebung, Filter im Empfänger, voll modellierbar sind, das eine wesentlich kürzere Rechnerlaufzeit als bekannte Verfahren erfordert und mit dem Untersuchungen über das Rückstreuvermögen flächenhafter Ziele ermöglicht werden.

Die Aufgabe wird erfindungsgemäss gelöst von Verfahren mit den in den Ansprüchen genannten Verfahrensschritten. Eine Vorrichtung zur selbsttätigen Durchführung der Verfahren ist Gegenstand von Unteransprüchen.

Mit dem erfindungsgemässen Verfahren wird die Momentanleistung des Senderausgangssignals auf sein momentanes Leistungsspektrum als Funktion von Zeit und Frequenz erweitert, so dass alle frequenzspezifischen Eigenschaften eines zu simulierenden Radarempfängers voll modellierbar sind, ohne auf die (meist mittels Monte Carlo Simulation durchgeführten) sehr langwierigen Verarbeitungsverfahren von Amplituden- und Phaseninformation zurückgreifen zu müssen. Da weiterhin die statistischen Eigenschaften von Radar- zielen (Punkt- und Flächenziele) mit Hilfe der statistischen Momente (im einfachsten Fall sind dies der Erwartungswert der Leistung und die dazugehörige Varianz) am Empfängerausgang, also einschliesslich aller frequenzspezifischer Übertragungscharakteristika, in Relation zum durch den Empfänger transformierten momentanen Leistungsspektrum und der angenommenen oder vorgegebenen Zielstatistik gesetzt werden können, entfällt die ansonsten notwendige Generation von statistisch relevanten Datensätzen über Monte Carlo Verfahren. Dies erlaubt eine Laufzeitverkürzung von Radar Simulationsprogrammen in einer Grössenordnung von zwei bis drei Zehnerpotenzen. Zusätzlich erlaubt die Benutzung der solchermassen verallgemeinerten Echoerzeugung unter Verwendung des momentanen Leistungsspektrums detaillierte Untersuchungen über die Kreuzkorrelation des Rückstreuvermögens von flächenhaften Zielen, so dass eine Verknüpfung von Radarrückstreuvermögen und physikalischen Zieleigenschaften automatisch ermöglicht wird. Dies ist zum Beispiel hilfreich für Verbesserungen des Modells über das Rückstreuvermögen von Meeresoberflächen, wie es zum Beispiel mit dem Scatterometer System des Erderkundungssatelliten ERS-1 untersucht werden soll.

Bezogen auf den Empfängerausgang, etwa die Video-Ebene, stellt die Verwendung des momentanen

2

Leistungsspektrums eine Alternative zu der in der Radartechnik unter dem Begriff "ambiguity function" bekannten Kreuzkorrelation zwischen Zeitfunktion des Sende- und Empfangssignals dar, da das momentane Leistungsspektrum ebenso wie die ambiguity function Zugang zu Range ambiguities (Laufzeitmehrdeutigkeiten) und Doppler ambiguities (Dopplerfrequenzmehrdeutigkeiten) erlaubt mit dem wesentlichen Unterschied, dass das momentane Leistungsspektrum durch alle Stufen des simulierten Radarempfängers transformiert werden kann und daher alle empfängerbedingten Mehrdeutigkeiten zusätzlich enthält, was wiederum eine simulatorgestützte Optimierung nicht nur des Sendesignals, sondern auch des kompletten Radarempfängers ermöglicht.

Zusätzlich wird das momentane Leistungsspektrum über die Fouriertransformation mit der momentanen Autokorrelationsfunktion verknüpft, welche Korrelationserhöhungen in der Radarzielsignatur durch das Empfängersystem zu simulieren gestattet und daher eine physikalisch sinnvolle Simulationsmöglichkeit für die empfängerbedingte Beeinflussung des räumlichen Auflösungsvermögens eines Radarsystems darstellt.

Durch Wegfall der ansonsten notwendigen Simulation von statistischen Zielparametern ergibt sich der Vorteil einer drastisch reduzierten Computerlaufzeit und damit die Möglichkeit, auch komplexe Radarsysteme mit allen Eckparametern in vertretbarer Zeit zu simulieren und weiterhin mehr Information über Auflösungsvermögen zu extrahieren.

Das erfindungsgemässe Radarsimulationsverfahren liefert als Ausgang die statistischen Momente des verarbeiteten Signals, deren erstes der Erwartungswert $<p(t)>$ der momentanen Leistung als Scharmittelwert ist und deren zweites die zugeordnete momentane Varianz $\sigma_{(<p(t)>)}$ ist. Diese Momente sind zum Beispiel mit einer Gauß-Statistik für die Wahrscheinlichkeitsdichte der Amplituden verknüpft über

$$p_g(a(t)) = \frac{1}{\sigma_g(t) \cdot \sqrt{2\pi}} e^{-\frac{a^2(t)}{2 \cdot \sigma_g^2(t)}}$$

mit

$p_g(a(t))$ = Gauß'sche Wahrscheinlichkeitsdichte
$a(t)$ = momentaner Amplitudenwert eines stochastischen Prozesses

$\sigma_g(t)$ = $<p(t)>$ = 2 FIG w(t, f) df: momentane Varianz der Gaußverteilung, definiert über das Frequenzintegral des momentanen Leistungsspektrums w(t, f) als Funktion der Zeit t und der Frequenz f.

Die Erfindung wird am Beispiel eines satellitengestützten Radars, welches die Meeresoberfläche aufnimmt, anhand einer Figur näher erläutert:

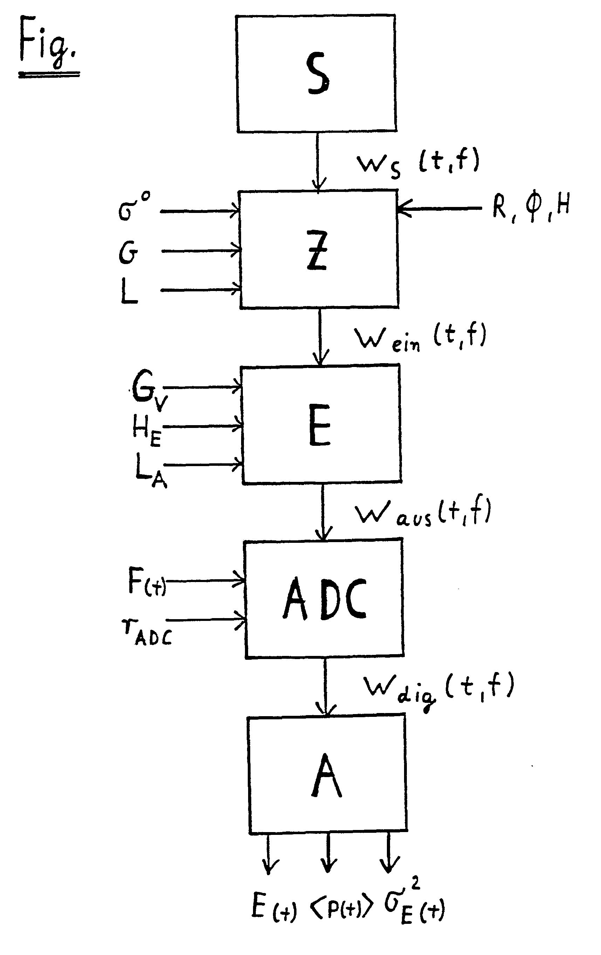

Die Figur zeigt schematisch den Verfahrensablauf eines erfindungsgemässen Radarsimulationsverfahrens anhand eines Blockschaltbildes eines Radarsimulators.

Die Figur zeigt einen Sendersimulator S, einen Zielsimulator Z, einen Empfänger E, einen A/D-Wandler ADC und eine Auswertestufe A. Nicht gezeigt ist eine Quadrierstufe Q, die für Radargeräte der genannten Art Voraussetzung ist.

Dem Sendersimulator wird das Sendesignal nach Amplituden- und Phasenverlauf vorgegeben. Der Sendersimulator erzeugt als Signal ein frequenz- und zeitabhängiges momentanes Leistungsspektrum $w_s(t, f)$. Das Signal wird im Zielsimulator Z mit geometrischen Faktoren wie Abstand R, Winkel Ø oder Höhe H, den Zieleigenschaften $\sigma^0$, den Ausbreitungsverlusten $L_A$ und den Antennengewinnen G in einer verallgemeinerten Radargleichung zum Empfängereingangssignal $w_{ein}(t, f)$ umgewandelt.

Im Empfängersimulator E wird dieses Signal durch Wirkungsweise aller Empfängerbausteine wie Filter $H_E(t)$, Mischer $L_M$ und Verstärker G weiter verändert zu $w_{aus}(t, f)$. In der Analog-Digital-Wandlerstufe ADC wird das Signal nochmals gewandelt, dabei wird es insbesondere geschwächt (Leistungsreduktionsfaktor F(t)) und verrauscht (Rauschleistungsbeitrag $r_{ADC}$).

In der letzten Stufe, der Auswertestufe A, wird die Leistung dem Erwartungswert nach $<p(t)>$, die akkumulierte Energie E(t) und die Varianz $\sigma^2(E(t))$ gebildet und angezeigt.

Das hier eben beschriebene Simulationsverfahren kann analytisch geschlossen ausgedrückt werden als Bildung der in der Meßzeit T am Radarempfängerausgang akkumulierten Energie E(t) zum Zeitpunkt t:

$$E(t) = \int_{t-T}^{t} <p(t')> dt'$$

mit

$$p(t) = 2 \cdot F(t) \cdot \int_{f=0}^{\infty} \text{Empf.} \{w_{ein}(t, f)\} df + r_{ADC}(t) + r_{therm.}(t)$$

mit

F(t) : als Leistungsreduktionsfaktor $\leqslant 1$ infolge von Amplitudenbegrenzung bei Analog zu Digital-Umsetzung,

$r_{ADC}(t)$ : als Rauschleistungsbeitrag infolge endlicher Quantisierungsstufen,

$r_{therm.}(t)$ : als Kombination von Empfänger- und Hintergrundrauschleistung,

$w_{ein}(t, f)$ : als momentanes Leistungsspektrum am ein Ausgang der Empfangsantenne, definiert durch die auf momentane Leistungsspektren verallgemeinerte Radargleichung:

$$w_{ein}(t, f) = \frac{\lambda_o^2}{(4\pi)^3} \int_{\emptyset=0}^{2\pi} \int_{R_1=\frac{c_o(t-\tau)}{2}}^{R_2=\frac{c_o t}{2}} \frac{G^2(R, \emptyset)\,\sigma^o(R, \emptyset, \ldots)}{R^4 \cdot L_A(R, \emptyset, \ldots)} \cdot$$

$$w_s(t - \tfrac{2R}{c_o}, f - f_d(R, \dot{R}, \emptyset)) \cdot \tfrac{R_E}{R_E + H} \cdot R \cdot dR \cdot d\emptyset,$$

mit

$\lambda_o$ : Wellenlänge der durch den Sender definierten Trägerfrequenz,

$R\,dR\,d\emptyset = dA$ : Flächenelement des effektiv rückstreuenden Zielgebietes,

$R$ : Abstand zwischen Radarsystem und Zielgebiet,

$\dot{R}$ : zeitliche Änderung des Abstandes,

$\emptyset$ : Azimutaler Winkel,

$\tau$ : Zeitdauer des gesamten Sendesignals,

$c_o$ : Lichtgeschwindigkeit,

$G(R, \emptyset)$ : Sende- und/oder Empfangsantennengewinn, bezogen auf Leistungspegel, als Funktion der Integrationskoordinaten $R$, $\emptyset$,

$\sigma^o(R, \emptyset, \ldots)$ : Leistungsreflektivität des Zielgebietes, wobei die Punkte andere Abhängigkeiten als die Integrationskoordinaten charakterisieren.

$L_A(R, \emptyset \ldots)$ : Ausbreitungsverluste, bedingt durch Atmosphäre, Nebel, Regen, Schnee,

$R_E$ : lokaler Erdradius als Funktion der Position des Radarsystems,

$H$ : lokale Höhe des Radarsystems über der Erdoberfläche,

$f_D(R, \dot{R}, \emptyset)$ : momentane Dopplerfrequenzverschiebung als Funktion der Integrationskoordinaten und der zeitlichen Änderung des Abstandes,

$\frac{2R}{c_o}$ : Retardierung infolge der Laufzeit,

$w_s(t, f)$ : momentanes Leistungsspektrum, wie es vom Sender generiert wird und über die Sendeantenne zur Abstrahlung gelangt.

Die Grösse Empf. {....} definiert als Operator die Wirkungsweise aller Empfängerbausteine, wie Filter $H_E(f)$, Mischer $L_M$ und Verstärker $G_V$ und kann anhand des folgenden Beispieles veranschaulicht werden, wobei ein Abwärtsmischvorgang vereinbart ist:

$$w_{aus}(t, f) = \text{Empf.}\{w_{ein}(t, f)\} = G_V \cdot L_M \cdot |H_E(f)|^2 \cdot w_{ein}(t, f - f_{Lo}(t))$$

mit
$G_V$ = Leistungsverstärkung der Verstärkerstufe,
$L_M$ = Konversionsverlust der Mischerstufe,
$H_E(f)$ = Betriebsübertragungsfunktion des Filters im Empfänger,
$f_{Lo}$ = Frequenz des den Mischer speisenden Lokaloszillators.

Die Varianz $\sigma^2_{E(t)}$ der akkumulierten Energie lässt sich über die momentane Autokorrelationsfunktion

$$\psi(t, z) = \int_{f\,=\,-\infty}^{+\infty} w_{dig}(t, f) \cdot e^{-i\,2\pi fz} \, df$$

aus der digitalisierten Empfängerausgangsleistung $w_{dig}(t, f)$, enthaltend die Varianzerhöhung durch den ADC-Prozess:

$$\sigma^2 ADC + \frac{(\Delta U)^2}{180} \text{ mit}$$

$\Delta U = \frac{2U_0}{2^{n_B}}$, wobei gilt:

$2U_0$ : Quantisierungsfenster,
$n_B$ : Zahl der beim Quantisieren benutzten sits

angegeben zu

$$\sigma^2_{E(t)} = \frac{2}{n^2} \sum_{\mu=1}^{n} \sum_{\psi=1}^{n} (\psi(t_\nu, |t_\nu - t_\mu|) \cdot$$

$$\{2\, s(t_\nu) \cdot s(t\mu) + \psi(t_\nu, |t_\nu - t_\mu|)\} ;$$

dabei ist für die Meßzeit T vereinbart:
$T = n \cdot \Delta t$
und $\Delta t$ ist der Zeitabschnitt zwischen zwei Abtastwerten. $\psi(t, z)$ ist die momentane Autokorrelationsfunktion.
$s(t)$ ist die deterministische Signalamplitude im Falle eines gemischten Prozesses:

$$s(t) = \sqrt{\psi\, s(t, O)}$$

wobei $\psi\, s(t, f)$ die momentane Autokorrelationsfunktion des deterministischen Signals ist.

**Patentansprüche**

1. Verfahren zur rechnergestützten Simulation kompletter Radarsysteme, die momentane Leistungs- und Frequenzinformationen auswerten, bei dem
a) als Signal das momentane Leistungsspektrum des Senderausgangssignals verwendet wird,
b) dieses Signal entsprechend dem Ausbreitungsweg und den Zieleigenschaften in einem Zielsimulator (Z) zum Empfängereingangssignal verändert wird,
c) das Empfängereingangssignal entsprechend den Eigenschaften des Empfängers in einem Empfängersimulator (E) zum Empfängerausgangssignal verändert wird,
d) das Empfängerausgangssignal entsprechend den Eigenschaften der weiterverarbeitenden Komponenten in einem Analog-Digital-Wandler (ADC) zum digitalisierten Ausgangssignal verändert wird,
e) die statistischen Momente erster und zweiter Ordnung des digitalisierten Ausgangssignals berechnet und angezeigt werden.
2. Verfahren nach Anspruch 1, dadurch gekennzeichnet, dass im Empfängersimulator (E) die Verstärkungseigenschaften ($G_V$), Filtereigenschaften ($H_E$) und Mischereigenschaften ($L_M$) modelliert werden.
3. Verfahren nach Anspruch 1 oder 2, dadurch gekennzeichnet, dass als weiterverarbeitende Komponente eine Doppler-Kompensatorstufe und ein Analog/Digital-Wandler (ADC) verwendet werden, wobei das Empfängerausgangssignal über angenommene Amplituden- und Phasenstatistiken verändert wird.

4. Verfahren nach Anspruch 3, dadurch gekennzeichnet, dass das Empfängerausgangssignal im A/D-Wandler durch Amplitudenbegrenzung leistungsreduziert wird und durch eine zusätzliche Rauscheinströmung seine momentane Varianz erhöht wird.

5. Verfahren nach einem der vorhergehenden Ansprüche, dadurch gekennzeichnet, dass als statistische Momente der Erwartungswert der momentanen Leistung $<p(t)>$ und die zugeordnete momentane Varianz $\sigma^2 E_{(t)}$ berechnet werden.

6. Verfahren nach Anspruch 5, dadurch gekennzeichnet, dass zusätzlich die akkumulierte Energie $E_{(t)}$ berechnet wird.

7. Vorrichtung zur Durchführung des Verfahrens von Anspruch 6, dadurch gekennzeichnet, dass sie einen Sendersimulator (S), der ein Leistungsspektrum erzeugt, einen Zielsimulator (Z), einen Empfängersimulator (E), einen A/D-Wandler (ADG), eine Quadrierstufe (Q) und eine Auswertestufe (A) zur Berechnung des Erwartungswertes der momentanen Leistung $<p(t)>$ der akkumulierten Energie $E_{(t)}$ und der Varianz $\sigma^2 E_{(t)}$ des digitalisierten Ausgangssignals umfasst.

8. Vorrichtung nach Anspruch 7, dadurch gekennzeichnet, dass sämtliche Bauteile als Software-Programmschritte dargestellt sind, die gesteuert durch eine intern ablaufende Programmuhr das zu simulierende System automatisch ablaufend nachbilden.

**Claims**

1. Process for the computer-aided simulation of complete radar systems, which evaluate instantaneous power and frequency data, in which:

(a) the instantaneous power spectrum of the transmitter output signal is used as a signal,

(b) this signal is changed in a target simulator (Z) into a receiver input signal according to the propagation path and the target characteristics,

(c) the receiver input signal is converted into the receiver output signal in a receiver simulator (E) according to the receiver characteristics,

(d) the receiver output signal is converted into a digitised output signal in an analogue to digital converter (ADC) according to the properties of the further processing components,

(e) the statistical moments of the first and second order of the digitised output signal are calculated and indicated.

2. Process according to claim 1, characterised in that the amplification properties ($G_V$), filter properties ($H_E$) and mixer properties ($L_M$) are modelled in the receiver simulator (E).

3. Process according to claim 1 or 2, characterised in that a Doppler compensator stage and an analogue to digital converter (ADC) are used as further processing components, whereby the receiver output signal is changed by means of simulated amplitude and phase statistics.

4. Process according to claim 3, characterised in that the receiver output signal in the ADC has its power reduced by amplitude limitation and its instantaneous variance increased by an additional influx of noise.

5. Process according to one of the preceding claims, characterised in that the expectancy value of the instantaneous power $<p(t)>$ and the associated instantaneous variance $\sigma^2 E_{(t)}$ are calculated as statistical moments.

6. Process according to claim 5, characterised in that the accumulated energy $E_{(t)}$ is also calculated.

7. Apparatus for carrying out the process of claim 6, characterised in that it includes a transmitter simulator (S) generating a power spectrum, a target simulator (Z), a receiver simulator (E), an analogue to digital converter (ADC), a square stage (Q) and an evaluation stage (A) for calculating the expectancy value of the instantaneous power $<p(t)>$ of the accumulated energy $E_{(t)}$ and the variance $\sigma^2 E_{(t)}$ of the digitised output signal.

8. Apparatus according to claim 7, characterised in that all components are represented as software program steps, which, controlled by an internally running program clock, continuosly copy the system to be simulated automatically.

**Revendications**

1. Procédé pour la simulation assistée par ordinateur de systèmes radar complets qui exploitent des informations de puissance et de fréquence instantanées, qui

a) utilise comme signal la puissance spectrique instantanée du signal de sortie de l'émetteur,

b) transforme ce signal en signal d'entrée du récepteur dans un simulateur de cible (Z), à savoir conformément au parcours de propagation et aux caractéristiques de la cible,

c) transforme le signal d'entrée du récepteur en signal de sortie du récepteur dans un simulateur de récepteur (E), conformément aux caractéristiques du récepteur,

d) transforme le signal de sortie du récepteur en signal de sortie numérisé dans un convertisseur analogiquenumérique (ADC), conformément aux caractéristiques des composants de traitement,

e) calcule et affiche les moments statistiques des premier et deuxième ordres du signal de sortie numérisé.

2. Procédé selon la revendication, caractérisé en ce que les caractéristiques de l'amplification ($G_V$), du filtre ($H_E$) et du mélangeur ($L_M$) sont modélisées dans le simulateur de récepteur (E).

3. Procédé selon l'une des revendications 1 ou 2, caractérisé en ce qu'il utilise comme composants de traitement ultérieur un étage compensateur Doppler et un convertisseur analogique/numérique ADC, le signal de sortie du récepteur étant modifié par l'intermédiaire de statistiques d'amplitude et de phase admises.

4. Procédé selon la revendication 3, caractérisé en ce que le signal de sortie du récepteur subit, dans le convertisseur A/D une réduction de puissance par limitation de l'amplitude et que sa variance instantanée est augmentée par l'élévation du niveau de bruit.

5. Procédé selon l'une quelconque des revendications 1 à 4, caractérisé en ce que la valeur escomptée de la puissance instantanée $<p(t)>$ et la variance instantanée associée $\sigma^2 E_{(t)}$ sont calculées comme moments statistiques.

6. Procédé selon la revendication 5, caractérisé en ce que l'énergie accumulée $E_{(t)}$ est calculée en plus.

7. Dispositif pour la mise en oeuvre du procédé selon la revendication 6, caractérisé en ce qu'il comporte un simulateur d'émetteur (S) qui génère une puissance spectrique, un simulateur de cible (Z), un simulateur de récepteur (E), un convertisseur A/D (ADC), un étage de transfert régi par une loi quadratique (Q) et un étage d'évaluation (A) pour le calcul de la valeur escomptée de la puissance instantanée $<p(t)>$, de l'énergie accumulée $E_{(t)}$ et de la variance $\sigma^2 E_{(t)}$ du signal de sortie numérisé.

8. Dispositif selon la revendication 7, caractérisé en ce que tous les composants sont représentés sous la forme de pas de programmes logiciels qui, commandés par une horloge interne, simulent le déroulement automatique du système à simuler.

<u>Fig.</u>

$$W_S\ (t,f)$$

$$\sigma^0$$
$$G$$
$$L$$

$$R,\phi,H$$

$$W_{ein}\ (t,f)$$

$$G_V$$
$$H_E$$
$$L_A$$

$$W_{aus}(t,f)$$

$$F(t)$$
$$\tau_{ADC}$$

$$W_{dig}\ (t,f)$$

$$E_{(t)}\quad \langle P(t)\rangle\quad \sigma^2_{E\ (t)}$$